# EUROPÄISCHE PATENTANMELDUNG

(11) **EP 4 815 265 A1**
(43) Veröffentlichungstag der Anmeldung: **30.09.2026**
(21) Anmeldenummer: 25165611.2
(22) Anmeldetag: 24.03.2025
(51) Int. Cl.: H02K 3/18, H02K 15/0421, H02K 15/043, H02K 15/104

(54) **SPULE UND VERFAHREN ZUM HERSTELLEN EINER SOLCHEN SPULE**

(71) Anmelder: Universität Stuttgart, 70174 Stuttgart (DE)
(72) Erfinder: Schäfer, Adrian Lukas, 70736 Fellbach (DE); Parspour, Nejila, 70839 Gerlingen (DE)
(74) Vertreter: Patentanwälte Ruff, Wilhelm, Beier, Dauster & Partner mbB

(57) **Zusammenfassung**

Eine Spule, vorzugsweise als Spule für einen Elektromotor, weist einen Spulenkörper auf, der aus mehreren Windungen besteht. Die Windungen bestehen aus einem Leiter aus Leitermaterial mit flachem Querschnitt in Schraubenlinienform, der gegenüberliegende Flachseiten aufweist, und liegen mit diesen Flachseiten aufeinander. Der Leiter weist durchgängig doppellagiges Leitermaterial auf, wobei die beiden Lagen des Leitermaterials im Längsverlauf zu mehr als 70% ihrer Länge aufeinander liegen. Beide Lagen des Leitermaterials sind in den aufeinanderliegenden Bereichen elektrisch leitend miteinander verbunden bzw. kontaktiert, wobei benachbarte Windungen gegeneinander elektrisch isoliert sind. So kann eine Spule mit hohem Kupferfüllfaktor erreicht werden, die sehr leistungsfähig ist.

## Beschreibung

Die Erfindung betrifft eine Spule, vorteilhaft eine Spule für eine elektrische Maschine bzw. einen Elektromotor mit einem Rotor und einem Stator, und ein Verfahren zum Herstellen einer solchen Spule.

Bekannt sind Spulen aus Flachdraht mit weitgehend rechteckigem Querschnitt, die aufwendig gewickelt sind. Die einzelnen Windungen sind dabei flach aufeinanderliegend gewickelt, was aber ein starkes Verbiegen bzw. Abrunden des Flachdrahts erfordert.

### Aufgabe und Lösung

Der Erfindung liegt die Aufgabe zugrunde, eine eingangs genannte Spule und ein Verfahren zum Herstellen einer solchen Spule zu schaffen, mit denen Probleme des Standes der Technik gelöst werden können und es insbesondere möglich ist, eine Spule für beispielsweise eine elektrische Maschine bzw. einen Elektromotor mit möglichst hohem Kupferfüllfaktor zu schaffen.

Gelöst wird diese Aufgabe durch eine Spule mit den Merkmalen des Anspruchs 1 sowie durch ein Verfahren zum Herstellen einer solchen Spule mit den Merkmalen des Anspruchs 17. Vorteilhafte sowie bevorzugte Ausgestaltungen der Erfindung sind Gegenstand der weiteren Ansprüche und werden im Folgenden näher erläutert. Dabei werden manche Merkmale nur für die Spule oder nur für das Verfahren beschrieben. Sie sollen jedoch unabhängig davon sowohl für eine solche Spule als auch für ein Verfahren zu deren Herstellen selbständig und unabhängig voneinander gelten können. Der Wortlaut der Ansprüche wird durch ausdrückliche Bezugnahme zum Inhalt der Beschreibung gemacht.

Die Spule kann in einer allgemeinen elektrischen Maschine eingebaut werden, insbesondere in einen Elektromotor, der mehrere dieser Spulen im Stator und/oder im Rotor aufweist. Die Spule weist einen Spulenkörper auf, der aus mehreren Windungen besteht bzw. mehrere Windungen aufweist, vorzugsweise weitgehend identische Windungen. Die Windungen bestehen aus einem Leiter aus Leitermaterial mit flachem, insbesondere angenähert rechteckigem, Querschnitt in Schraubenlinienform. Der Querschnitt weist gegenüberliegende Flachseiten auf, und diese Flachseiten liegen dabei aufeinander, wobei vorteilhaft alle Windungen möglichst eng miteinander verpresst sind bzw. möglichst kompaktiert sind. Bevorzugt sind unten und/oder oben an der Spule Anschlussenden des Leiters bzw. an die Leiter und somit an die Windungen vorgesehen.

Erfindungsgemäß weist der Leiter durchgängig mehrlagiges bzw. mindestens doppellagiges Leitermaterial auf, vorteilhaft in flacher Form. Diese mindestens zwei oder mehr Lagen des Leitermaterials liegen in ihrem Längsverlauf zu mehr als 70% ihrer Länge aufeinander, vorteilhaft zu mehr als 90% oder mehr als 95%. Dabei sind die mindestens zwei Lagen des Leitermaterials in den aufeinanderliegenden Bereichen elektrisch leitend miteinander verbunden bzw. kontaktiert, was entweder durch bloßes Aufeinanderliegen bewirkt werden kann oder durch Verlöten miteinander. Benachbarte Windungen sind dabei elektrisch gegeneinander isoliert. Vorteilhaft sind die Windungen der fertigen Spule nicht durch Winden oder Biegen eines Leiters, insbesondere eines massiven Leiters, um einen Kern hergestellt. Bevorzugt sind die einzelnen Windungen der fertigen Spule durch Falten oder Aufeinanderlegen von mehreren einzelnen Lagen, nämlich mindestens zwei Lagen, von elektrisch leitfähigem Material hergestellt. Es könnten auch drei oder noch mehr Lagen sein.

In einer ersten grundsätzlichen Ausbildung der Erfindung werden die Windungen durch Falten von Flachmaterial aufeinander hergestellt, wobei vorzugsweise das Flachmaterial ursprünglich aus einer einzigen Lage bestanden hat. In einer zweiten grundsätzlichen Ausbildung der Erfindung werden die Windungen durch Legen von Abschnitten aus Flachmaterial aufeinander hergestellt, wobei vorzugsweise das Flachmaterial und die Abschnitte ursprünglich aus einer einzigen Lage bestanden haben.

In einer ersten Ausgestaltung der ersten grundsätzlichen Ausbildung ist der Leiter aus einem Flachmaterial geformt, das in einer Ausgangskonfiguration überwiegend einlagig aus geschlossenen Ringabschnitten besteht, die miteinander verbunden sind und eine längliche Reihe bilden, wobei vorteilhaft lediglich die beiden Endabschnitte der Reihe offen ausgebildet sind. Jeder geschlossene Ringabschnitt weist gegenüberliegende Endseiten auf und ist mit diesen gegenüberliegenden Endseiten mit dem jeweils benachbarten Ringabschnitt verbunden bzw. geht einstückig in diesen über. Des Weiteren sind jeweils benachbarte Ringabschnitte spiegelsymmetrisch zu einer quer zur Längsausdehnung der länglichen Reihe verlaufenden Quer-Spiegelachse ausgebildet. Das gesamte geformte Flachmaterial kann in Ausgangskonfiguration spiegelsymmetrisch zu einer mittig entlang der Längsausdehnung der länglichen Reihe verlaufenden Längs-Spiegelachse ausgebildet sein.

In den direkt miteinander benachbarten Bereichen der Ringabschnitte können Einschnitte in das Flachmaterial vorgesehen sein, die von der Quer-Spiegelachse zwischen den beiden Ringabschnitten ausgehen und die bis an einen Außenrand des Flachmaterials verlaufen. Vorzugsweise können die Einschnitte in einem benachbarten Bereich punktsymmetrisch zueinander um einen Punkt auf der Quer-Spiegelachse ausgebildet sein.

In Weiterbildung der Erfindung wird in der Längsausdehnung der länglichen Reihe gesehen ein links von der Längs-Spiegelachse gelegener halber Ringabschnitt auf den rechts daneben liegenden halben Ringabschnitt gefaltet und deckt diesen weitgehend ab, sodass die beiden weitgehend deckungsgleich ausgebildet sind und voll aufeinanderliegen. Danach oder auch gleichzeitig wird bei den jeweils benachbarten Ringabschnitten der rechts von der Längs-Spiegelachse gelegene halbe Ringabschnitt auf den links daneben liegenden halben Ringabschnitt gefaltet und deckt diesen weitgehend ab, wobei auch diese deckungsgleich ausgebildet sind und voll aufeinanderliegen. In einer Zwischenkonfiguration weist das Flachmaterial bzw. das Zwischenergebnis abwechselnd links und rechts neben der Längs-Spiegelachse liegende doppellagige halbring-förmige Abschnitte auf, die in den direkt miteinander benachbarten Bereichen als Übergangsabschnitt zwischen ihnen die Längs-Spiegelachse queren. Dabei können vorzugsweise die Übergangsabschnitte wechselnde Biegung aufweisen als angenäherte S-Form bzw. das Zwischenergebnis kann mäanderartige Form aufweisen.

In nochmaliger Weiterbildung der Erfindung sind benachbarte und entlang der Längs-Spiegelachse aufeinanderfolgende doppellagige halbring-förmige Abschnitte derart um die ursprünglichen Quer-Spiegelachsen zu dem vorhergehenden doppellagigen halbring-förmigen Abschnitt hin gefaltet, dass die jeweils doppellagigen halbring-förmigen Abschnitte gemeinsam eine Windung der Spule bilden entsprechend einer Form, die den ursprünglichen Ringabschnitten entspricht. Dabei können durchgehend aufeinanderfolgende doppellagige halbring-förmige Abschnitte mit jeweils gleicher Faltrichtung aufeinander gefaltet sein und so die Spule in Schraubenlinienform bilden.

In einer anderen zweiten Ausgestaltung der ersten grundsätzlichen Ausbildung ist der Leiter wiederum aus einem Flachmaterial geformt, das in einer Ausgangskonfiguration einlagig ist und eine längliche Struktur mit einer Längsrichtung ist, die aus aufeinanderfolgenden, gleichartigen Abschnitten besteht, wobei vorteilhaft jeweils jeder zweite Abschnitt identisch ist, so dass es im Wesentlichen zwei Arten von Abschnitten gibt. Die Abschnitte folgen aufeinander und verlaufen so, dass sie in einer Art Mäanderform jeweils abwechselnd links und rechts von der Längsrichtung ausgehend nach außen gebogen sind. Die Abschnitte weisen erste Teilabschnitte auf, die zwischen 52% und 70% einer umlaufenden Windung der fertigen Spule einnehmen, vorzugsweise zwischen 57% und 65%. Diese aufeinanderfolgenden ersten Teilabschnitte sind in einem Verbindungsbereich miteinander verbunden und punktsymmetrisch zueinander ausgebildet. In dem Verbindungsbereich ist eine Faltlinie zwischen den benachbarten Teilabschnitten vorgesehen, die durch den Punkt der Punktsymmetrie verläuft. Die Teilabschnitte weisen Längsseiten auf in einem Bereich zwischen den beiden Verbindungsbereichen, die hin zu den jeweils benachbarten Abschnitten weisen. An Außenkanten dieser Längsseiten schließen längliche zweite Außenabschnitte als Teil der Abschnitte an, die über einen Großteil ihrer Länge einstückig und einteilig mit den Längsseiten der Teilabschnitte verbunden sind. Sie liegen nach einer ersten Faltung entlang der Außenkante zwischen Längsseite des Teilabschnitts und zweitem Außenabschnitt vollständig und genau überdeckend auf dem Teilabschnitt auf und bilden dann den doppellagigen Abschnitt, wobei nach dieser ersten Faltung eine Zwischenkonfiguration bzw. ein Zwischenergebnis vorliegt. Jeder Teilabschnitt steht über beide freie Enden des aufliegenden Außenabschnitts über bzw. ist länger als dieser ausgebildet.

Durchgehend aufeinander folgende doppellagige oder mehrlagige Abschnitte sind mit jeweils gleicher Faltrichtung an den Faltlinien aufeinander gefaltet und bilden die Spule mit ihrer Schraubenlinienform. Die Länge der freien Enden der Teilabschnitte und der Außenabschnitte ist dabei derart, dass nach dem ersten Falten der Außenabschnitte auf die Teilabschnitte und nach einem zweiten Falten der jeweils weitgehend doppellagigen Abschnitte aufeinander in abwechselnder Reihenfolge die freien Enden der Teilabschnitte und der Außenabschnitte in einer Ebene jeweils aneinander liegen bzw. aneinander stoßen, vorteilhaft direkt aneinander, um einen elektrischen Kontakt zu erzeugen.

In Weiterbildung der Erfindung können die freien Enden der Teilabschnitte und der Außenabschnitte nicht überlappen, sondern stumpf aneinanderstoßen. Dabei sind vorzugsweise die freien Enden korrespondierend zueinander ausgebildet, vorzugsweise mit korrespondierenden und ineinander greifenden Vorsprüngen und Einschnitten odgl., insbesondere punktsymmetrisch oder achsensymmetrisch.

Allgemein kann das Flachmaterial in der Ausgangskonfiguration auf einer Flachseite, insbesondere vollflächig, elektrisch isoliert sein bzw. Isoliermaterial für eine elektrische Isolierung aufweisen, vorzugsweise ausgewählt aus der Gruppe Backlack, Isolierpapier, Isolierfolie.

Vorteilhaft kann das Flachmaterial auf einer Flachseite, insbesondere auf der Flachseite, die der wie vorgenannt Isolationsmaterial aufweisenden Flachseite gegenüberliegt, Lötpaste oder Lötzinn aufweisen. Dabei können das Isoliermaterial und die Lötpaste bzw. das Lötzinn derart auf die Flachseiten verteilt sein, dass das Flachmaterial beim ersten Falten mit den die Lötpaste aufweisenden Flachseiten aufeinandergefaltet ist, wobei in der Zwischenkonfiguration die wesentlichen Oberflächen des Flachmaterials nach außen mit Isolationsmaterial bedeckt sind. So können die aufeinanderliegenden Windungen der fertigen Spule gegeneinander elektrisch isoliert sein.

In einer ersten Ausgestaltung der zweiten grundsätzlichen Ausbildung ist die Spule aus einzelnen Ringsegmenten ausgebildet, wobei ein Ringsegment im Wesentlichen oder genau eine Windung der Spule bildet. Die Ringsegmente sind jeweils aus Flachmaterial mit gegenüberliegenden Flachseiten gebildet, vorteilhaft wie es zuvor beschrieben worden ist. Des Weiteren sind die Ringsegmente aus mehreren unterschiedlichen, insbesondere zwei unterschiedlichen, ringförmigen Segmentgruppen gebildet oder ausgewählt. Jede ringförmige Segmentgruppe weist zwei Teil-Ringsegmente auf, die separat voneinander vorliegen, wobei die zwei Teil-Ringsegmente jeder Segmentgruppe zusammengelegt eine Form entsprechend einer Windung der Spule aufweisen. Diese Form ist ringförmig geschlossen, insbesondere trapezförmig ausgebildet. Die zwei Teil-Ringsegmente weisen freie Enden auf, die ohne einander zu überlappen stumpf aneinanderstoßen und einen elektrischen Kontakt miteinander herstellen. Die freien Enden der Teil-Ringsegmente der einen Segmentgruppe sind an anderer Stelle angeordnet als die freien Enden der Teil-Ringsegmente der anderen Segmentgruppen, wobei sich insbesondere die freien Enden nicht überschneiden. Die Enden von unterschiedlichen Teil-Ringgruppen können vorteilhaft einen Abstand von mindestens 5 mm bis 20 mm oder mindestens einer Breite des Leiters aufweisen.

Eine Windung der Spule in Schraubenlinienform ist im Wesentlichen aus zwei aufeinander gelegten Teil-Ringsegmenten der einen Segmentgruppe und zwei aufeinander gelegten Teil-Ringsegmenten der anderen Segmentgruppe gebildet derart, dass von einer unteren Segmentgruppe ein freies Ende eine Teil-Ringsegments frei absteht zur Verbindung mit einem korrespondierenden freien Ende des anderen Teil-Ringsegments der vorhergehenden Segmentgruppe. Dabei kann insbesondere das andere freie Ende dieses Teil-Ringsegments von einem aufliegenden Teil-Ringsegment der aufliegenden Segmentgruppe überdeckt sein, wobei ein freies Ende des überdeckenden Teil-Ringsegments frei absteht zur Verbindung mit einem korrespondierenden freien Ende des anderen Teil-Ringsegments der nachfolgenden Segmentgruppe. Die Spule mit ihrer Schraubenlinienform ist dabei gebildet durch Verbinden der jeweils freien Enden und der überlappenden Flachseiten der Teil-Ringsegmente.

In Weiterbildung können die einzelnen Teil-Ringsegmente derselben Segmentgruppe mit einem freien Ende mit einem passenden Teil-Ringsegment der vorausgehenden, eine Windung bildenden Segmentgruppe verbunden sein als Fortsetzung von deren Verlauf. Mit dem anderen freien Ende sind sie mit dem anderen Teilsegment seiner Segmentgruppe verbunden, wobei dessen anderes freies Ende mit dem nächsten korrespondierenden Teil-Ringsegment der nachfolgenden Segmentgruppe ineinander übergehend verbunden ist. Ein Teil-Ringsegment der anderen Segmentgruppe ist derart auf die beiden zusammengehörenden Teil-Ringsegmente der anderen Segmentgruppe aufgelegt, dass es mit durchgehendem Verlauf die miteinander verbundenen freien Enden der anderen Segmentgruppe überdeckt zur Verbesserung des elektrischen Kontrakts bzw. des Stromflusses. Das andere Teil-Ringsegment ist mit einem freien Ende mit dem korrespondierenden freien Ende des anderen Teil-Ringsegment dieser Segmentgruppe verbunden, und mit dem anderen freien Ende mit dem freien Ende eines Teil-Ringsegments der nachfolgenden Segmentgruppe verbunden. Dabei ist das andere freie Ende dieses anderen Teil-Ringsegments mit einem freien Ende des korrespondierenden Teil-Ringsegments der vorhergehenden Segmentgruppe verbunden. So setzt sich die Verbindung jeweils fort und geht durch die gesamte Spule.

Es kann vorgesehen sein, dass die Ringsegmente beider bzw. aller Segmentgruppen aus genau zwei separaten Teil-Ringsegmenten gebildet sind. Dabei weist jedes Teil-Ringsegment zwei freie Enden auf, wobei vorzugsweise die Spule in ihrer Form bzw. als Projektion eine Trapezform für jede Windung aufweist, die zwei gegenüberliegende kurze Trapezseiten und zwei gegenüberliegende lange Trapezseiten aufweist. Dabei können bei einer Segmentgruppe die freien Enden der Teil-Ringsegmente dieser Segmentgruppe an den langen Trapezseiten liegen, und bei der anderen Segmentgruppe die freien Enden der Teil-Ringsegmente dieser Segmentgruppe an den kurzen Trapezseiten liegen. Insbesondere können die freien Enden jeweils durch einen Mittelpunkt der Trapezseiten verlaufen.

In einer zweiten Ausgestaltung der zweiten grundsätzlichen Ausbildung ist die Spule aus einzelnen Ringsegmenten ausgebildet, wobei wiederum ein Ringsegment im Wesentlichen eine Windung der Spule bildet. Die Ringsegmente sind jeweils aus Flachmaterial mit gegenüberliegenden Flachseiten gebildet wie zuvor beschrieben. Die Ringsegmente sind hier aus mehreren unterschiedlichen, insbesondere aus zwei unterschiedlichen, ringförmigen Teil-Ringen aus Teil-Ringgruppen gebildet. Jeder Teil-Ring weist eine Form einer Windung der Spule auf, wobei diese Form ringförmig geschlossen ist, insbesondere trapezförmig ist, so wie auch die fertige Spule. Jeder Teil-Ring weist eine Durchtrennung auf, die zwei Enden ergibt, die nicht überlappen, sondern stumpf aneinanderstoßen. Dabei ist das Ende eines Teil-Rings der einen Teil-Ringgruppe an anderer Stelle angeordnet als das Ende eines Teil-Rings der anderen Teil-Ringgruppe, insbesondere überschneiden bzw. überdecken sich die Enden von unterschiedlichen Teil-Ringgruppen nicht. Die Enden von unterschiedlichen Teil-Ringgruppen können vorteilhaft einen Abstand von mindestens 5 mm bis 20 mm oder mindestens einer Breite des Leiters aufweisen.

Eine Windung der Spule in Schraubenlinienform ist im Wesentlichen aus mit ihren Flachseiten aufeinander gelegten Teil-Ringen jeweils der einen Teil-Ringgruppe und der anderen Teil-Ringgruppe derart gebildet, dass von einem unteren Teil-Ring ein Ende frei absteht zur Verbindung mit einem korrespondierenden Ende des Teil-Rings der vorhergehenden Windung. Dabei steht ein Ende des überdeckenden Teil-Rings frei ab zur Verbindung mit einem korrespondierenden Ende des anderen Teil-Rings der nachfolgenden Windung. Die Spule in Schraubenlinienform wird dabei gebildet durch Verbinden der Enden und der überlappenden Flachseiten der Teil-Ringe.

In Weiterbildung der Erfindung können die freien Enden der Teil-Ringsegmente bzw. der Teil-Ringe nicht gerade bzw. quer zu ihrem Längsverlauf abgeschnitten sein, sondern schräg dazu. Insbesondere sind sie derart abgeschnitten, dass die Schnitte von einer Außenkante beginnend in einem Winkel zwischen 60° und 90° starten und dann schräg bzw. sehr schräg verlaufen, wobei vorzugsweise die Einschnitte an einem Ende eines Teil-Ringsegments relativ kurz sind. Insbesondere können die Einschnitte in einem Winkel von insgesamt etwa 50° bis 70° zum Längsverlauf des Teil-Ringsegments in diesem Bereich verlaufen, wobei insbesondere eine Richtung des Einschnitts am gegenüberliegenden Ende des Teil-Ringsegments zwischen 10° und 30° zum Längsverlauf in diesem Bereich verlaufen kann. Derartige freie Enden können gut als stumpfer Stoß miteinander verbunden werden für eine elektrische Verbindung mit geringem Übergangswiderstand.

In nochmaliger Weiterbildung können auch hier die einzelnen Ringsegmente als Windungen, aus denen die Spule gebildet ist, auf ihren freien Flachseiten isoliert sein bzw. Isoliermaterial für eine elektrische Isolierung aufweisen, insbesondere vollflächig. Das Isoliermaterial kann vorzugsweise aus der Gruppe Backlack, Isolierpapier, Isolierfolie ausgewählt sein. Der Backlack kann zuvor aufgebracht sein, wobei vorzugsweise Isolierpapier oder Isolierfolie nachträglich zwischen die Windungen der Spule eingebracht bzw. eingeschoben werden können.

In Weiterbildung der Erfindung kann die Spule zwischen zwei Lagen aus Isoliermaterial mehr als zwei Lagen des elektrisch leitfähigen Flachmaterials aufweisen, wobei diese Lagen aus den vorbeschriebenen Segmentgruppen gebildet worden sind. Dabei können die gleiche Anzahl beider Segmentgruppen vorgesehen sein, die insbesondere abwechselnd zwischen den Isolierlagen angeordnet sind. Von Vorteil ist es, wenn alle Segmentgruppen zwischen zwei Isolierlagen flach aufeinander liegen und dabei elektrisch leitend miteinander verbunden bzw. kontaktiert sind, entweder mit Lot odgl. oder ohne.

Vorteilhaft kann die Spule als Projektion einer Windung eine geometrische Grundform aufweisen, die aus der Gruppe Kreis, Oval, Rechteck, Trapez ausgewählt ist.

Bei dem Verfahren zum Herstellen einer zuvor beschriebenen Spule werden die Windungen der Spule aus flachem Leitermaterial bzw. aus genanntem Flachmaterial hergestellt, das durchgängig doppellagig aufeinandergefaltet oder aufeinandergelegt wird in Schraubenlinienform. Dabei sind bzw. werden aufeinanderfolgende Windungen gegeneinander elektrisch isoliert mittels Isoliermaterial.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelnen Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen dargestellt und werden im Folgenden näher erläutert. In den Zeichnungen zeigen:
- Fig. 1: Draufsicht auf einen Leiter aus Flachmaterial wie dünnem Kupferblech in einer Ausgangskonfiguration, der einlagig aus geschlossenen Ringabschnitten besteht,
- Fig. 2a: eine Vergrößerung des oberen Endes des Lagers aus Fig. 1 mit Darstellung von punktierten Faltlinien für einen Faltschritt 1 und einen Faltschritt 2, wozu Einschnitte im Leiter vorgesehen sind,
- Fig. 2b: eine Darstellung eines Zwischenschritts, wie ausgehend von Fig. 2a die Faltschritte 1 durchgeführt sind,
- Fig. 3: eine Draufsicht auf die Spule, die sich nach Durchführen der Faltschritte aus dem Leiter nach Fig. 1 und 2b ergibt und die vier Windungen des doppellagigen Leiters sowie nach oben stehende Anschlussenden aufweist,
- Fig. 4: eine Abwandlung eines anderen Leiters aus Flachmaterial, der aus in Mäanderform aufeinanderfolgenden Abschnitten besteht mit jeweils freien Enden an Teilabschnitten, die zusammengefügt werden,
- Fig. 5: eine Vergrößerung ähnlich Fig. 2a des oberen Endes des Leiters aus Fig. 4 mit punktiert dargestellten Faltlinien für einen Faltschritt 1 und einen Faltschritt 2,
- Fig. 6: eine Draufsicht auf die fertige Spule mit vier Windungen eines doppellagigen Leiters und nach oben stehenden Anschlussenden,
- Fig. 7: zwei einzelne Teil-Ringsegmente aus einlagigem dünnem Flachmaterial mit jeweils einem durchgehenden länglichen Schnitt, wobei die beiden Schnitte gleichartig sind,
- Fig. 8: links eine Vielzahl von linken Teil-Ringsegmenten und rechts eine Gruppe von rechten Teil-Ringsegmenten, die mit ihren einen freien Enden mit dem entsprechenden anderen freien Ende eines benachbarten Teil-Ringsegments stumpf aneinanderstoßen, wobei jeweils drei Windungen in durchgehender Form gebildet sind,
- Fig. 9: eine Darstellung, wie die beiden Segmentgruppen ineinandergeschoben sind und so einen doppellagigen Leiter für eine Art Spule mit drei Windungen bilden,
- Fig. 10: einen Schnitt für ein Isolationspapier mit derselben Trapezform wie die Teil-Ringsegmente aus Fig. 7, allerdings einen Schnitt an anderer Stelle, und rechts eine Gruppe mehrerer dieser Isolationspapiere als Form entsprechend derjenigen der Fig. 9, die nochmals in diesem Spulenkörper eingeschoben wird, um benachbarte doppellagige Windungen gegeneinander zu isolieren,
- Fig. 11: eine Darstellung dieses Zustands, nachdem das Isolationspapier in die Spulenwindungen aus Fig. 9 eingebracht ist, wobei das Isolationspapier vertikal schraffiert ist und der Leiter der Spule gar nicht schraffiert ist zur Veranschaulichung,
- Fig. 12: zwei weitere mögliche Ausgestaltungen für Ringsegmente in angenäherter Trapezform entsprechend der Fig. 7, die jeweils zwei Schnitte aufweisen und dadurch unter besserer Ausnutzung von Flachmaterial hergestellt werden können,
- Fig. 13: eine Darstellung ähnlich der Fig. 8 mit einzelnen Segmentgruppen,
- Fig. 14: eine Darstellung ähnlich Fig. 9, bei der die beiden Segmentgruppen aus Fig. 13 ineinandergeschoben sind,
- Fig. 15: eine Darstellung ähnlich der Fig. 10 mit einer anderen Ausgestaltung für Isolationspapier,
- Fig. 16: eine Darstellung entsprechend Fig. 11, wie die Struktur aus Isolationspapier gemäß Fig. 15 rechts in den Spulenkörper gemäß Fig. 14 eingeschoben ist, um benachbarte doppellagige Windungen gegeneinander zu isolieren,
- Fig. 17: zwei weitere Varianten für Schnitte in Ringsegmente aus Flachmaterial für den Leiter, die eine unterschiedlich verzahnte Kontaktierung ermöglichen mit langen Zähnen, und
- Fig. 18: drei weitere Beispiele für weitere Alternativen für die Ausgestaltung von Schnitten in Ringsegmente mit unterschiedlicher Anzahl von kurzen Zähnen.

### Detaillierte Beschreibung der Ausführungsbeispiele

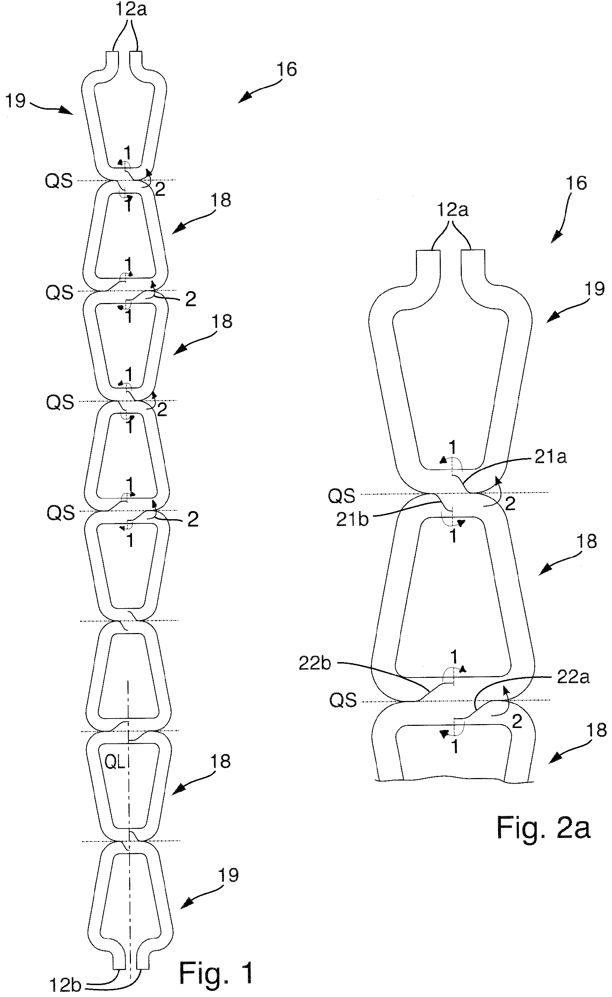

In der Fig. 1 ist ein Stanzmuster 16 dargestellt, das aus dünnem Flachmaterial hergestellt ist, beispielsweise Kupferblech mit einer Dicke von 0,1 mm, alternativ Aluminiumblech. Es kann durch Stanzen oder durch Lasern hergestellt sein, weitere Alternativen sind Schneiden, z.B. mit einem Cut-Plotter, Wasserstrahlschneiden, chemisches Ätzen, Drahterodieren oder Fräsen. Vorteilhaft ist das Kupferblech oder allgemein das Flachmaterial in der Ausgangskonfiguration auf einer Oberseite oder auf einer Unterseite mit einer flächigen elektrischen Isolation versehen, beispielsweise Backlack, oder weist eine sonstige Beschichtung oder Isolationsfolie bzw. Isolationspapier auf. Die andere Seite kann bereits im Rohzustand oder nach dem Herausformen oder Herausstanzen des Stanzmusters 16 mit Lotpaste beschichtet sein, dies muss sie aber nicht.

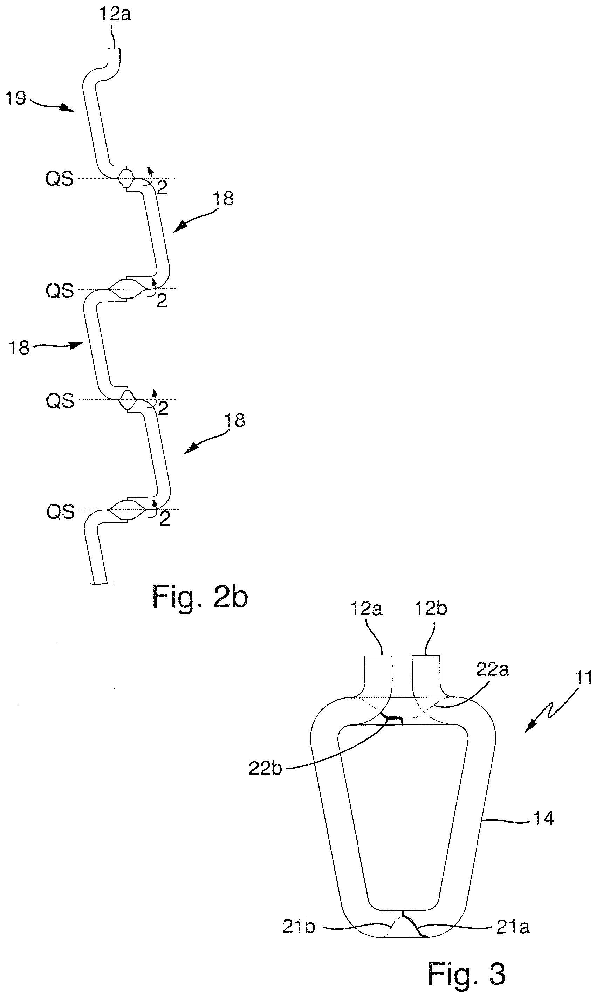

Das Stanzmuster 16 besteht aus Ringabschnitten 18, die geschlossen sind und im Wesentlichen trapezartige Form aufweisen. Lediglich der oberste Abschnitt und der unterste Abschnitt, die jeweils Anschlussenden 12a und 12b aufweisen, sind etwas anders ausgebildet und nach außen nicht geschlossen. Das Stanzmuster 16 der Fig. 1 weist sechs geschlossene Ringabschnitte 18 und die beiden Endabschnitte 19 auf, so dass sich hieraus insgesamt eine Spule 11 entsprechend Fig. 3 mit vier Windungen 14 und den beiden nach oben ragenden Anschlussenden 12a und 12b ergibt. Der obere Endabschnitt 19 und der Ringabschnitt 18 direkt darunter sind in der Vergrößerung der Fig. 2a gut zu ersehen.

Deutlich erkennbar ergibt sich für das gesamte Stanzmuster 16 eine Spiegelsymmetrie durch eine vertikale Längsmittelachse. Die geschlossenen benachbarten Ringabschnitte 18 sind zueinander spiegelsymmetrisch zu einer jeweiligen Quer-Spiegelachse QS, von denen einige punktiert eingezeichnet sind.

Zur Herstellung der Spule 11 aus Fig. 3 muss das Flachmaterial, das einlagig vorliegt, zuerst doppellagig zusammengefaltet werden. Um dies zu erreichen, sind in den Bereichen der Ringabschnitte 18, die an der Quer-Spiegelachse liegen, Einschnitte 21a und 21b sowie an den längeren Seiten an den Quer-Spiegelachsen QS Einschnitte 22a und 22b vorgesehen. Diese Einschnitte 21a und 21b sowie 22a und 22b sind jeweils punktsymmetrisch ausgebildet zu einem Punkt, an dem sich die Spiegelachse des gesamten Stanzmusters 16 mit den jeweiligen Quer-Spiegelachsen QS schneidet. Die Einschnitte sind insbesondere leicht S-förmig ausgebildet. Sie gehen jeweils von außen bis kurz vor eine Innenöffnung der Ringabschnitte 18 und der Endabschnitte 19, so dass sie ganz allgemein etwa 70% bis 90% der Breite der Leiter durchtrennen.

Zum Falten wird in einem Faltschritt 1 gemäß Fig. 1 und 2a am oberen Endabschnitt 19 der rechte Bereich des Endabschnitts 19 um die vertikal verlaufende kurze punktierte Faltlinie 1 nach links gefaltet, so dass er genau auf dem linken halben Endabschnitt aufliegt. Dabei werden auch die beiden einzelnen Anschlussenden 12a exakt aufeinandergelegt, um doppellagig zu sein.

Beim unter dem oberen Endabschnitt 19 liegenden Ringabschnitt 18 wird ebenfalls in einem Faltschritt 1 der linke halbe Ringabschnitt auf den rechten halben Ringabschnitt um die punktierte Faltlinie 1 gefaltet. Die Einschnitte 21a, 21b und 22a, 22b ermöglichen dabei das reine Falten, ohne das Flachmaterial einzureißen.

Als Ergebnis liegt ein doppellagiges Leitermaterial in einer Art Mäanderform vor, wie in der Fig. 2b dargestellt ist, wobei die doppellagigen aufeinanderliegenden halben Ringabschnitte pro Ringabschnitt mal links und mal rechts, jeweils abwechselnd, von der ursprünglichen vertikalen Spiegelachse liegen. In dem Verlauf gemäß Fig. 2b weisen alle doppellagigen halben Ringabschnitte beispielsweise auf der sichtbaren Oberseite eine elektrische Isolation auf, die aus aufgeklebtem Isolationspapier besteht. Dieses ist auch an der Unterseite vorhanden. Die in der Fig. 2a auf den Oberseiten befindliche Lotpaste ist jeweils auf die Lotpaste des anderen halben Ringabschnitts aufgelegt worden, um so die beiden Lagen zu verlöten und einen möglichst geringen gesamten elektrischen Widerstand der Spule 11 zu erreichen.

Anschließend werden in einem Faltschritt 2 um die horizontalen Faltlinien 2, die den Quer-Spiegelachsen QS entsprechen, die doppellagigen halben Ringabschnitte so abwechselnd aufeinandergefaltet, dass sie sich wiederum zu der ursprünglichen Form der Ringabschnitte zusammenfinden, jeweils Windungen 14 ergeben, die einmal umlaufen, und insgesamt die Spule 11 mit vier Windungen 14 in Schraubenlinienform bilden. Dies entspricht der Fig. 3. In der Fig. 3 sind auch noch die Einschnitte 21a und 21b sowie 22a und 22b eingezeichnet, teilweise punktiert, weil sie unter einer Lage aus Kupfermaterial liegen.

Die fertige Spule 11 mit vier Windungen 14, die jeweils abgerundete Trapezform aufweisen, ist also doppellagig aus dem flachen Kupfermaterial ausgebildet und weist somit einen relativ geringen elektrischen Widerstand auf. Durch das vorgenannte Isolationspapier sind die einzelnen Windungen 14 auch gegeneinander elektrisch isoliert. Es könnte auch, wenn die Spule 14 etwas auseinandergezogen wird, noch eine zusätzliche elektrische Isolation eingebracht werden. Wird die Spule 11 dagegen zusammengedrückt, so weist sie einen sehr hohen Füllfaktor bzw. Kupferfüllfaktor auf. Selbstverständlich kann mit einem längeren Stanzmuster 16 entsprechend Fig. 1 auch eine Spule 11 mit mehr als vier Windungen hergestellt werden. Eine derartige Spule kann beispielsweise eine Statorspule für eine elektrische Maschine sein.

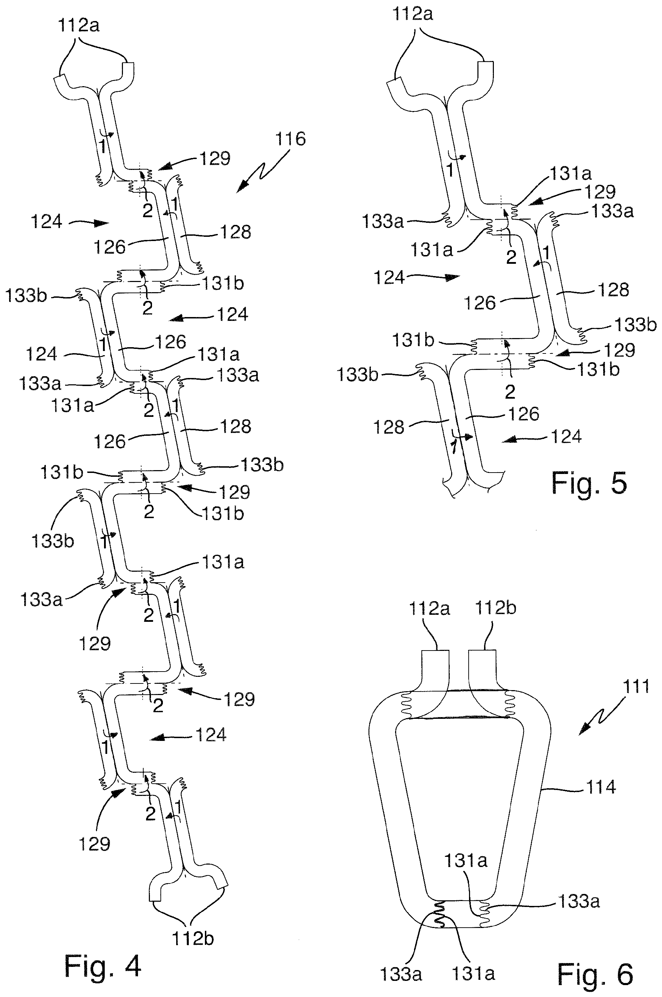

In der Fig. 4 ist ein alternatives Stanzmuster 116 dargestellt, das nicht aus weitgehend oder ganz geschlossenen Ringabschnitten besteht entsprechend Fig. 1, sondern aus sozusagen zweispurigen oder doppelspurigen Abschnitten 124, die insgesamt eine Mäanderform bilden, die noch ausgeprägter scheint als in der Fig. 2b. Ganz oben und ganz unten sind wieder Anschlussenden 112a und 112b vorgesehen.

Die Abschnitte 124 weisen erste Teilabschnitte 126 auf sowie jeweils an diese zur Seite hin und nach außen angehängte zweite Außenabschnitte 128, wobei die ersten Teilabschnitte 126 und die zweiten Außenabschnitte 128 entlang der Außenkanten miteinander verbunden sind. Die ersten Teilabschnitte 126 sind jeweils in Verbindungsbereichen 129 miteinander verbunden, und entlang dieser verlaufen punktierte Faltlinien 2 für einen Faltschritt 2. Entlang der Verbindungen zwischen einem ersten Teilabschnitt 126 und einem daran außen anschließenden zweiten Außenabschnitt 128 verlaufen punktierte Faltlinien für einen Faltschritt 1.

Die ersten Teilabschnitte 126 weisen sozusagen in den Verbindungsbereichen 129 abwechselnd kurze und längere Bereiche auf. Dies liegt daran, dass die hieraus gebildete fertige Spule 111 gemäß Fig. 6 auch wieder die angenäherte bzw. abgerundete Trapezform der Spule 11 entsprechend Fig. 3 aufweisen soll.

Die ersten Teilabschnitte 126 weisen freie Enden 131a am kurzen Abschnitt und freie Enden 131b am jeweiligen langen Abschnitt auf. Die zweiten Außenabschnitte 128 weisen sozusagen gegenüberliegend freie Enden 133a und 133b auf. Dies ist auch jeweils aus der vergrößerten Darstellung der Fig. 5 zu ersehen.

Ähnlich wie zuvor beschrieben weist auch das Stanzmuster 116 der Fig. 4 bzw. das dort gezeigte Flachmaterial auf der zu sehenden Oberseite vorteilhaft eine Lotpaste auf, und an der anderen Seite eine elektrische Isolation wie vorteilhaft Isolationspapier. Die Lotpaste muss nicht zwingend sein, ist aber vorteilhaft.

In einem Faltschritt 1 wird nun anhand der Vergrößerung der Fig. 5 jeder zweite Außenabschnitt 128 entlang der entsprechenden Faltlinie 1 auf den ersten Teilabschnitt 126 gelegt, so dass er vollständig und deckungsgleich darauf aufliegt. Dies erfolgt durchgehend für das Stanzmuster 116. Dann ergibt sich eine Form, die grob derjenigen aus Fig. 2b ähnelt, obwohl hier für das Stanzmuster 116 keine Achsensymmetrie vorgesehen ist. Eine Punktsymmetrie in einzelnen Abschnitten des Stanzmusters 116 verläuft nur entlang der Faltlinien 2 für den Faltschritt 2 auf der halben Länge der beiden längeren oder kürzeren Abschnitte im jeweiligen Verbindungsbereich 129.

Anschließend erfolgt der Faltschritt 2 entlang der entsprechenden punktierten Faltlinie 2, wodurch sich nicht nur allgemein die Spule 111 gemäß Fig. 6 mit vier Windungen 114 und den beiden Anschlussenden 112a und 112b ergibt. Vielmehr liegen dann auch die freien Enden 131 und 133 der einzelnen Abschnitte aneinander an, und zwar so, dass die freien Enden 131b mit ihrer Zahnung genau in die Zahnung der freien Enden 133b greifen und dabei stumpf anliegen. Ebenso greifen die freien Enden 131a in die freien Enden 133a, und die Endseiten liegen stumpf daran an. Somit muss zwar anders als bei der Spule 11 gemäß Fig. 3 der Strom zwischen zwei Lagen von Kupfermaterial über die stumpfen Stöße der freien Enden 131a/133a und 131b/133b fließen. Sie können aber durch Aneinanderliegen einen guten elektrischen Kontakt bilden. Zusätzlich kann durch das Verwenden und Hineinfließen von Lotpaste die elektrische Kontaktierung verbessert werden. Durch die mehrfach gezahnte Ausgestaltung der freien Enden 131 und 133 soll hier eine größere Stoßfläche erreicht werden, die einen insgesamt geringeren Übergangswiderstand bewirkt.

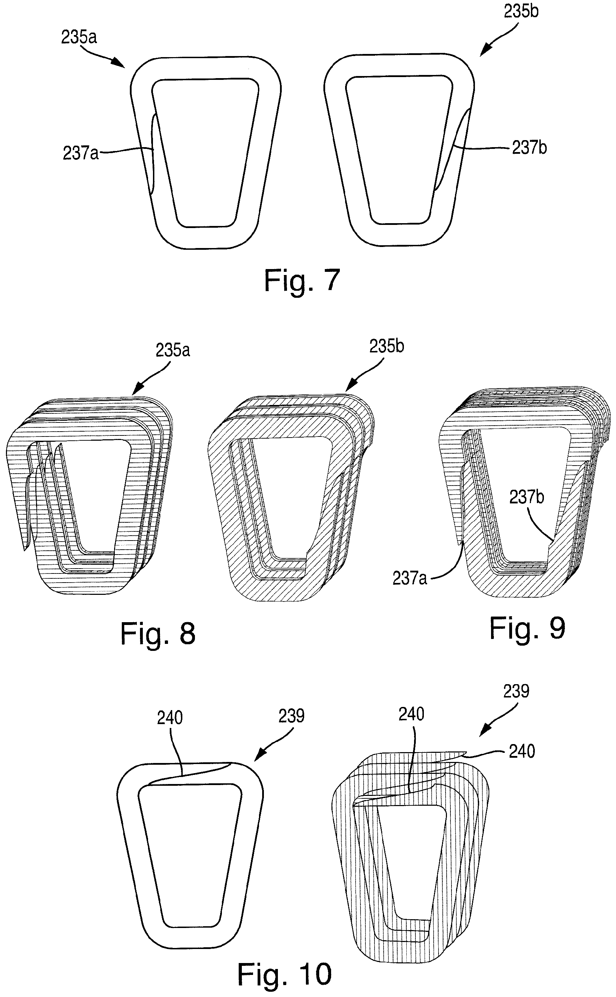

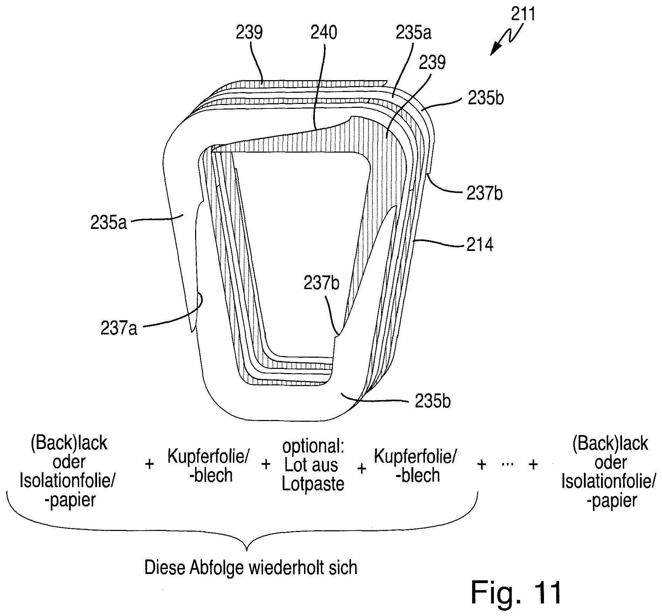

Eine nochmals alternative Ausgestaltung zur Herstellung einer erfindungsgemäßen Spule, die ohne Faltung auskommt, wird in einer ersten Ausgestaltung in den Fig. 7 bis 11 dargestellt und beschrieben. Hier sind einzelne Teil-Ringsegmente 235a und 235b hergestellt, und zwar aus Flachmaterial bzw. dünnem Kupferblech wie zuvor erläutert. Die Teil-Ringsegmente 235a und 235b weisen schon entsprechend den Fig. 3 und 6 eine abgerundete Trapezform einer gewünschten Spule auf, wie sie dann als Spule 211 in Fig. 11 dargestellt ist, wenngleich noch ohne elektrischen Anschluss bzw. ohne Anschlussenden.

Das Teil-Ringsegment 235a weist einen Schnitt 237a auf, und das Teil-Ringsegment 235b weist einen Schnitt 237b auf. Somit sind die beiden Teil-Ringsegmente 235a und 235b zwar umlaufend, aber nicht ganz umlaufend geschlossen bzw. können am Schnitt 237a geöffnet werden. Zur Bildung einer fertigen doppellagigen Spule 211 gemäß Fig. 11 sind vier Teil-Ringsegmente 235a und vier Teil-Ringsegmente 235b notwendig. Somit bilden die Teil-Ringsegmente 235a eine erste Segmentgruppe, und die Teil-Ringsegmente 235b eine zweite Segmentgruppe. Sie weisen die Schnitte 237a und 237b an gegenüberliegenden Seiten auf, wobei die Schnitte per se sehr ähnlich ausgebildet sind. Sie beginnen jeweils möglichst rechtwinklig zu den Außenkanten und verlaufen dann in sehr flacher angenäherter S-Form zur gegenüberliegenden Außenkante.

In der Darstellung der Fig. 8 sind die Teil-Ringsegmente 235a horizontal schraffiert dargestellt, und die Teil-Ringsegmente 235b der anderen Segmentgruppe sind schräg schraffiert. Die jeweiligen Teil-Ringsegmente der jeweiligen Segmentgruppe werden an den Schnitten 237a und 237b in die Zeichenebene hinein und hinaus verbogen, und die freien Enden an den Schnitten 237a und 237b werden mit dem nächsten Teil-Ringsegment 235, das darunterliegt oder darüberliegt, verbunden. Dargestellt ist dies der Einfachheit halber für jeweils drei Teil-Ringsegmente 235a links und drei Teil-Ringsegmente 235b rechts in Fig. 8. Links ist beim obersten Teil-Ringsegment 235a die Kantenfläche entlang des Schnitts 237a am freien Ende zu sehen. Aufgrund der leichten Schrägansicht ist dies beim freien Ende entlang des Schnitts 237b rechts beim obersten Teil-Ringsegment 235b nicht zu erkennen.

Anschließend werden die beiden einlagigen, schraubenlinienförmigen Aufbauten deckungsgleich ineinandergeschoben, wobei das in Fig. 8 zu sehende freie Ende des oberen Teil-Ringsegments 235a freiliegt. Gleichzeitig liegt auch das freie Ende des rechten obersten Teil-Ringsegments 235b frei. Hier könnten sozusagen weitere Teil-Ringsegmente anschließen für noch mehr Windungen für die Spule. Alternativ zu einem Ineinanderschieben können die einzelnen Teil-Ringsegmente auf einen bzw. um einen Dorn odgl. mit Außenquerschnitte entsprechend dem gewünschten Innenquerschnitt der fertigen Spule aufgeschichtet werden in der entsprechenden Reihenfolge. Der Dorn stabilisiert den Aufbau dann bzw. hält ihn genau in der gewünschten Form.

Um die doppellagige Ausgestaltung einer fertigen Spule 211 entsprechend Fig. 11 zu bilden, müssen jeweils zwei Lagen miteinander elektrisch verbunden sein oder zumindest aneinander anliegen, aber gegenüber der nächsten Windung 214 dann elektrisch isoliert sein. Dazu ist ein in Fig. 10 dargestelltes Isolationspapier 239 vorgesehen mit einem Schnitt 240 entsprechend wie bei einem Teil-Ringsegment 235, nur ist eben der Schnitt 240 an anderer Stelle vorgesehen. Werden drei dieser Isolationspapiere 239 sozusagen schraubenlinienförmig zusammengefügt ähnlich der Fig. 8, so ergibt sich die in Fig. 10 rechts dargestellte Form, wobei die Oberfläche des Isolationspapiers 239 vertikal schraffiert ist.

Diese mehrere Windungen bildende Ausgestaltung mit dem Isolationspapier 239 gemäß Fig. 10 rechts wird nun in die Anordnung der Fig. 9 nochmals seitlich hineingeschoben bzw. ineinandergeführt oder um einen Dorn herum gestapelt, wodurch sich die Spule 211 gemäß Fig. 11 ergibt. Allerdings sind hier die einzelnen Oberflächen der Teil-Ringsegmente 235 nicht mehr schraffiert, sondern ohne Schraffierung dargestellt. So ist ersichtlich, dass zwischen je zwei doppellagigen Windungen der Spule 211 eine Lage des vertikal schraffierten Isolationspapiers 239 verläuft. Die Abfolge ist extra noch einmal darunter verbal genannt. Eine Seite der Teil-Ringsegmente 235 entsprechend Fig. 7 kann dann eine Beschichtung mit Lotpaste aufweisen wie zuvor erläutert.

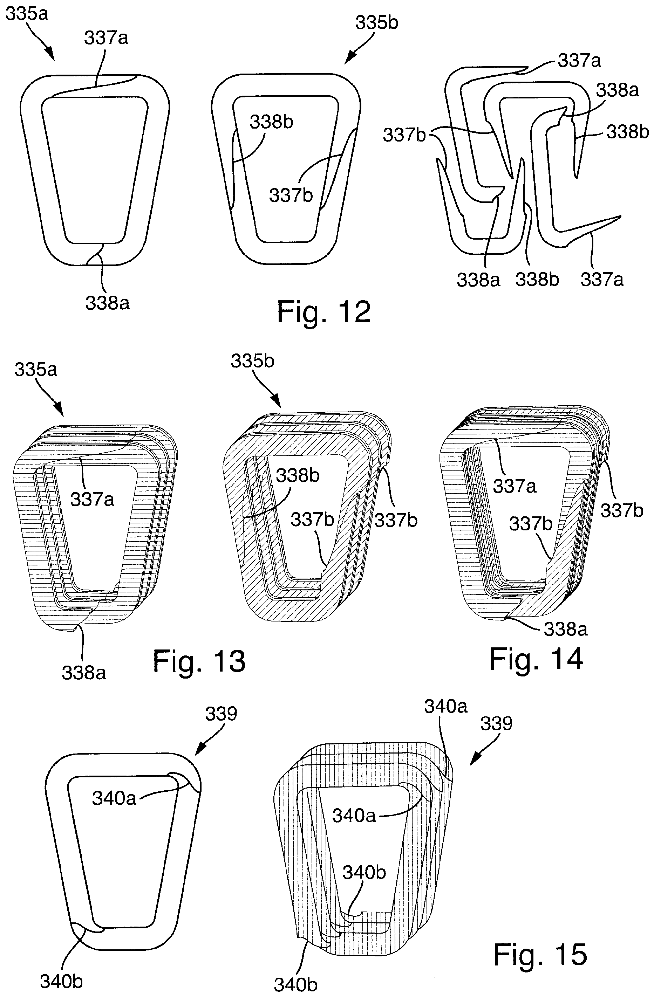

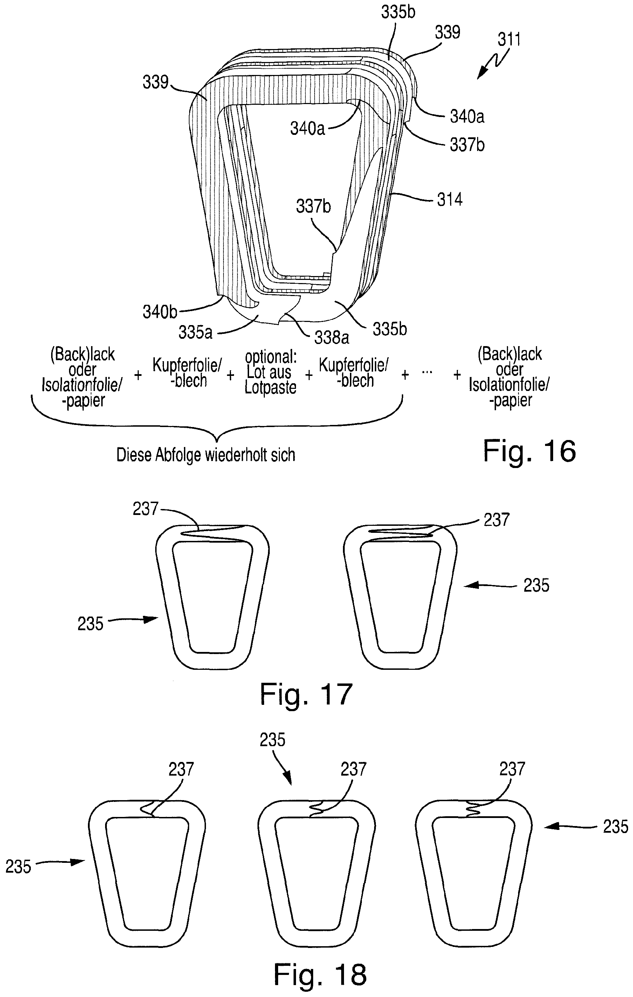

In den Fig. 12 bis 16 ist eine zweite Ausgestaltung für Teil-Ringsegmente 335a und 335b dargestellt. Diese weisen dieselbe angenäherte Trapezform auf mit Abrundung wie in der Fig. 7. Allerdings weist jedes Teil-Ringsegment zwei Schnitte 337a und 338a bzw. 337b und 338b auf. So kann jedes Teil-Ringsegment 335a und 335b in seinen vier Einzelteilen durch Stanzen hergestellt werden, alternativ mit einem anderen vorgenannten Verfahren, wobei die Einzelteile dann zusammengefügt werden. Rechts in der Fig. 12 ist ein entsprechendes Muster dargestellt. Aus dem Vergleich mit der Fig. 7 ist leicht zu ersehen, dass aus einer vorgegebenen Fläche an Flachmaterial bzw. Kupferblech mehr Einzelteile für die Teil-Ringsegmente erzeugt werden können, die Ausnutzung ist also größer. Allerdings erhöht sich die Anzahl der stumpfen Stöße von einzelnen Lagen des Leitermaterials bzw. Kupfermaterials, was den elektrischen Widerstand für eine fertige Spule 311 gemäß Fig. 16 erhöhen kann.

Entsprechend dem Prinzip der Fig. 8 und 9 werden aus den einzelnen Teilen der Teil-Ringsegmente 335a und 335b ähnlich wie gemäß Fig. 7 einzelne Teil-Ringsegmente nachgebildet, die nur einmal durchschnitten sind. Bei den Teil-Ringsegmenten 235a ist dies am Schnitt 338a, an den Teil-Ringsegmenten 335b ist dies am Schnitt 337b.

Die in Fig. 13 dargestellten Aneinanderreihungen von Teil-Ringsegmenten 335a und 335b, jeweils wieder mit derselben Schraffierung, werden ineinandergeschoben, siehe Fig. 14, oder aufeinandergestapelt. Dabei liegen wieder die freien Enden entsprechend den Schnitten 338a und 337b frei.

Ein Isolationspapier 339 ist in der Fig. 15 dargestellt, das hier zwei Schnitte 340a und 340b aufweist. So kann es in Einzelteilen hergestellt bzw. ausgeschnitten sein, und ebenfalls ein Material effizienter nutzen. Die Einzelteile werden ähnlich wie in Fig. 10 dreifach aufeinandergelegt für die dort dargestellte Anordnung mit vertikaler Schraffierung. Dann wird dieses Isolationspapier entsprechend Fig. 16 in die Anordnung aus Teil-Ringsegmenten 335a und 335b entsprechend Fig. 14 eingebracht, wobei deren freie Leiterflächen wiederum nicht mehr schraffiert sind. So ergibt sich die Spule 311 gemäß Fig. 16 mit drei Windungen 314, wobei diese Windungen 314 doppellagig sind und mittels einer Lage des Isolationspapiers 239 gegeneinander elektrisch isoliert sind. Auch hier ist wiederum entsprechend Fig. 11 diese Abfolge darunter extra noch einmal verbal genannt.

Um ähnlich wie bei den Ausgestaltungen der Fig. 4 bis 6 den elektrischen Widerstand an den stumpfen Stößen der freien Enden entlang der Schnitte 237 entsprechend Fig. 7 zu verringern, können die Schnitte sozusagen mit einer unterschiedlichen Anzahl von lang ausgebildeten Zähnen entsprechend Fig. 17 ausgeführt sein. Links in Fig. 17 ist sozusagen durch den Schnitt 237 ein von rechts kommender einzelner langer Zahn gebildet. Rechts in der Fig. 17 sind auf beiden Seiten des Schnitts 237 zwei lange Zähne gebildet, die jeweils ineinandergreifen.

In der Fig. 18 sind weitere Varianten mit kurzen Zähnen in unterschiedlicher Anzahl dargestellt.

Eine Herstellung einer fertigen Spule 211 oder 311 gemäß der vorstehenden Beschreibung kann auch dadurch erfolgen, dass die einzelnen Teil-Ringsegmente oder deren Teile sowie Isolationspapiere um einen Dorn oder einen Kern herum aufgebaut werden, dessen Querschnitt dem inneren freien Bereich einer fertigen abgerundeten trapezförmigen Spule entspricht. So kann jeweils gemäß den Abfolgen der Fig. 11 und 16 eine fertige Spule 211 bzw. 311 aufgebaut werden. Anschließend müssen noch Anschlussenden bzw. elektrische Anschlüsse hergestellt werden, was aber einfach ist.

Zu ergänzen ist noch, wie solche Spulen 11 bis 311 aufgebaut sind, die nicht verlötet sind, also keine Lotpaste odgl. aufweisen. Hier müssen die einzelnen Teile oder Windungen zunächst durch eine äußere Halterung aufeinander gepresst werden, sodass eine gute Kontaktierung der nichtisolierten Flächen miteinander gewährleistet ist. Die Pressung kann beispielsweise durch einen Verschraubungsmechanismus in der äußeren Halterung aufgebracht und gehalten werden, sodass die Verspannung durch die Halterung aufgebracht und aufrechterhalten werden kann. Alternativ kann die Pressung von außen aufgebracht werden, wobei die Halterung einen Arretier-/Einrastmechanismus enthält, um die Pressung aufrechtzuhalten, sobald die äußere Pressung durch den Verschraubungsmechanismus abnimmt. Damit wird die Verspannung durch die Halterung sozusagen nur aufrechterhalten. Letzteres lässt sich auch durch ein an sich bekanntes Vergussmaterial umsetzen. Es kann also eine äußere Pressung aufgebracht werden, während die Spule ganz oder teilweise mit einem Vergussmaterial umschlossen wird. Die äußere Pressung wird so lange aufrechterhalten, bis das Vergussmaterial vollständig ausgehärtet ist. Das Vergussmaterial dient dann als Halterung, Hülle, Isolation und zur Aufrechterhaltung der Pressung.

Die fertige Spule weist einen hohen Füllfaktor auf bei weitgehend oder völlig rechteckigem Querschnitt samt dünner Isolation. So ergeben sich geringe AC-Verluste, vor allem bei Verwendung von Kupfer. Die einzelnen Windungen sind quasi aus dünnem Flachdraht gebildet.

## Patentansprüche

1. Spule, vorzugsweise Spule für einen Elektromotor mit einem Rotor und einem Stator, an dem die Spule angeordnet ist, wobei:
- die Spule einen Spulenkörper aufweist, der aus mehreren Windungen besteht,
- die Windungen aus einem Leiter aus Leitermaterial mit flachem Querschnitt in Schraubenlinienform, der gegenüberliegende Flachseiten aufweist, bestehen und mit den Flachseiten aufeinander liegen,
**dadurch gekennzeichnet, dass**:
- der Leiter durchgängig mindestens doppellagiges Leitermaterial aufweist, wobei die mindestens zwei Lagen des Leitermaterials im Längsverlauf zu mehr als 70% ihrer Länge aufeinander liegen,
- die mindestens zwei Lagen des Leitermaterials in den aufeinanderliegenden Bereichen elektrisch leitend miteinander verbunden bzw. kontaktiert sind,
- benachbarte Windungen gegeneinander elektrisch isoliert sind.

2. Spule nach Anspruch 1, **dadurch gekennzeichnet, dass**:
- der Leiter aus einem Flachmaterial geformt ist, das in einer Ausgangskonfiguration im Wesentlichen einlagig aus geschlossenen Ringabschnitten besteht, die miteinander verbunden sind und eine längliche Reihe bilden,
- jeder Ringabschnitt gegenüberliegende Endseiten aufweist und mit diesen gegenüberliegenden Endseiten mit dem jeweils benachbarten Ringabschnitt verbunden ist bzw. einstückig in diesen übergeht,
- jeweils benachbarte Ringabschnitte spiegelsymmetrisch zu einer quer zur Längsausdehnung der länglichen Reihe verlaufenden Quer-Spiegelachse ausgebildet sind,
- das gesamte Flachmaterial in Ausgangskonfiguration spiegelsymmetrisch zu einer mittig entlang der Längsausdehnung der länglichen Reihe verlaufenden Längs-Spiegelachse ausgebildet ist,
- in den direkt miteinander benachbarten Bereichen der Ringabschnitte Einschnitte in das Flachmaterial vorgesehen sind, die ausgehend von der Quer-Spiegelachse zwischen den beiden Ringabschnitten und bis an einen Außenrand des Flachmaterials verlaufen,
- vorzugsweise die Einschnitte in einem benachbarten Bereich punktsymmetrisch zueinander ausgebildet sind um einen Punkt auf der Quer-Spiegelachse.

3. Spule nach Anspruch 2, **dadurch gekennzeichnet, dass**:
- in der Längsausdehnung der länglichen Reihe gesehen ein links von der Längs-Spiegelachse gelegener halber Ringabschnitt auf den rechts daneben liegenden halben Ringabschnitt gefaltet wird und diesen weitgehend abdeckt,
- bei den jeweils benachbarten Ringabschnitten der rechts von der Längs-Spiegelachse gelegene halbe Ringabschnitt auf den links daneben liegenden halben Ringabschnitt gefaltet wird und diesen weitgehend abdeckt,
- als Zwischenkonfiguration das Flachmaterial abwechselnd links und rechts neben der Längs-Spiegelachse liegende doppellagige halbring-förmige Abschnitte aufweist, die in den direkt miteinander benachbarten Bereichen als Übergangsabschnitt zwischen ihnen die Längs-Spiegelachse queren,
- vorzugsweise die Übergangsabschnitte wechselnde Biegung aufweisen als angenäherte S-Form.

4. Spule nach Anspruch 3, **dadurch gekennzeichnet, dass** benachbarte und entlang der Längs-Spiegelachse aufeinanderfolgende doppellagige halbring-förmige Abschnitte derart um die ursprünglichen Quer-Spiegelachsen zu dem vorhergehenden doppellagigen halbring-förmigen Abschnitt hin gefaltet sind, dass die jeweils doppellagigen halbring-förmigen Abschnitte gemeinsam eine Windung der Spule bilden entsprechend einer Form, die den Ringabschnitten entspricht, wobei durchgehend aufeinanderfolgende doppellagige halbring-förmige Abschnitte mit jeweils gleicher Faltrichtung aufeinander gefaltet sind und die Spule in Schraubenlinienform bilden.

5. Spule nach Anspruch 1, **dadurch gekennzeichnet, dass**:
- der Leiter aus einem Flachmaterial geformt ist,
- das Flachmaterial in einer Ausgangskonfiguration einlagig ist und eine längliche Struktur mit einer Längsrichtung ist, die aus aufeinanderfolgenden, gleichartigen Abschnitten besteht,
- die Abschnitte aufeinanderfolgen und in Mäanderform jeweils abwechselnd links und rechts von der Längsrichtung ausgehend nach außen gebogen verlaufen,
- die Abschnitte erste Teilabschnitte aufweisen, die zwischen 52 % und 70 % einer umlaufenden Windung der fertigen Spule einnehmen,
- diese aufeinanderfolgenden ersten Teilabschnitte in einem Verbindungsbereich miteinander verbunden sind und punktsymmetrisch zueinander ausgebildet sind,
- im Verbindungsbereich eine Faltlinie zwischen den benachbarten Teilabschnitten vorgesehen ist, die durch den Punkt der Punktsymmetrie verläuft,
- die Teilabschnitte Längsseiten aufweisen in einem Bereich zwischen den beiden Verbindungsbereichen hin zu den jeweils benachbarten Abschnitten,
- an Außenkanten dieser Längsseiten längliche zweite Außenabschnitte als Teil der Abschnitte anschließen, die über einen Großteil ihrer Länge einstückig und einteilig mit den Längsseiten der Teilabschnitte verbunden sind und die nach einer ersten Faltung entlang der Außenkante zwischen Längsseite des Teilabschnitts und zweitem Außenabschnitt vollständig und genau überdeckend auf dem Teilabschnitt aufliegen und dann den doppellagigen Abschnitt bilden, wobei nach dieser ersten Faltung eine Zwischenkonfiguration vorliegt,
- jeder Teilabschnitt über beide freie Enden des aufliegenden Außenabschnitts übersteht bzw. länger ausgebildet ist,
- durchgehend aufeinander folgende doppellagige Abschnitte mit jeweils gleicher Faltrichtung an den Faltlinien aufeinander gefaltet sind und die Spule in Schraubenlinienform bilden,
- die Länge der freien Enden der Teilabschnitte und der Außenabschnitte derart ist, dass nach dem ersten Falten der Außenabschnitte auf die Teilabschnitte und nach einem zweiten Falten der jeweils weitgehend doppellagigen Abschnitte aufeinander in abwechselnder Reihenfolge die freien Enden der Teilabschnitte und der Außenabschnitte in einer Ebene jeweils aneinander liegen bzw. aneinander stoßen.

6. Spule nach Anspruch 5, **dadurch gekennzeichnet, dass** die freien Enden der Teilabschnitte und der Außenabschnitte nicht überlappen, sondern stumpf aneinanderstoßen, wobei vorzugsweise die freien Enden korrespondierend zueinander ausgebildet sind, vorzugsweise mit korrespondierenden und ineinander greifenden Vorsprüngen und Einschnitten odgl..

7. Spule nach einem der vorhergehenden Ansprüche, **dadurch gekennzeichnet, dass** das Flachmaterial in der Ausgangskonfiguration auf einer Flachseite, insbesondere vollflächig, elektrisch isoliert ist bzw. Isoliermaterial für eine elektrische Isolierung aufweist, vorzugsweise ausgewählt aus der Gruppe Backlack, Isolierpapier, Isolierfolie.

8. Spule nach einem der vorhergehenden Ansprüche, **dadurch gekennzeichnet, dass** das Flachmaterial auf einer Flachseite, insbesondere auf der Flachseite, die der gemäß Anspruch 7 Isolationsmaterial aufweisenden Flachseite gegenüberliegt, Lötpaste oder Lötzinn aufweist, wobei das Isoliermaterial und die Lötpaste bzw. das Lötzinn derart auf die Flachseiten verteilt sind, dass das Flachmaterial beim ersten Falten mit den die Lötpaste aufweisenden Flachseiten aufeinandergefaltet ist, wobei in der Zwischenkonfiguration die wesentlichen Oberflächen des Flachmaterials nach außen mit Isolationsmaterial bedeckt sind.

9. Spule nach Anspruch 1, **dadurch gekennzeichnet, dass**:
- die Spule aus einzelnen Ringsegmenten ausgebildet ist, wobei ein Ringsegment im Wesentlichen eine Windung der Spule bildet,
- die Ringsegmente jeweils aus Flachmaterial mit gegenüberliegenden Flachseiten gebildet sind,
- die Ringsegmente aus mehreren unterschiedlichen, insbesondere zwei unterschiedlichen, ringförmigen Segmentgruppen gebildet sind,
- jede ringförmige Segmentgruppe zwei Teil-Ringsegmente aufweist, die separat voneinander vorliegen,
- die zwei Teil-Ringsegmente jeder Segmentgruppe zusammengelegt eine Form einer Windung der Spule aufweisen, wobei diese Form ringförmig geschlossen ist, insbesondere trapezförmig ist,
- die zwei Teil-Ringsegmente freie Enden aufweisen, die ohne zu überlappen stumpf aneinanderstoßen,
- die freien Enden der Teil-Ringsegmente der einen Segmentgruppe an anderer Stelle angeordnet sind als die freien Enden der Teil-Ringsegmente der anderen Segmentgruppen, insbesondere sich die freien Enden nicht überschneiden,
- eine Windung der Spule in Schraubenlinienform im Wesentlichen aus zwei aufeinander gelegten Teil-Ringsegmenten der einen Segmentgruppe und zwei aufeinander gelegten Teil-Ringsegmenten der anderen Segmentgruppe gebildet ist derart, dass von einer unteren Segmentgruppe ein freies Ende eine Teil-Ringsegments frei absteht zur Verbindung mit einem korrespondierenden freien Ende des anderen Teil-Ringsegments der vorhergehenden Segmentgruppe, wobei insbesondere das andere freie Ende dieses Teil-Ringsegments von einem aufliegenden Teil-Ringsegment der aufliegenden Segmentgruppe überdeckt ist, wobei ein freies Ende des überdeckenden Teil-Ringsegments frei absteht zur Verbindung mit einem korrespondierenden freien Ende des anderen Teil-Ringsegments der nachfolgenden Segmentgruppe,
- die Spule in Schraubenlinienform gebildet ist durch Verbinden der freien Enden und der überlappenden Flachseiten der Teil-Ringsegmente.

10. Spule nach Anspruch 9, **dadurch gekennzeichnet, dass**:
- die einzelnen Teil-Ringsegmente derselben Segmentgruppe mit einem freien Ende mit einem passenden Teil-Ringsegment der vorausgehenden, eine Windung bildenden Segmentgruppe verbunden sind als Fortsetzung ihres Verlaufs, und mit dem anderen freien Ende mit dem anderen Teilsegment seiner Segmentgruppe verbunden sind, wobei dessen anderes freies Ende mit dem nächsten korrespondierenden Teil-Ringsegment der nachfolgenden Segmentgruppe ineinander übergehend verbunden ist,
- ein Teil-Ringsegment der anderen Segmentgruppe auf die beiden zusammengehörenden Teil-Ringsegmente der anderen Segmentgruppe aufgelegt ist derart, dass es mit durchgehendem Verlauf die miteinander verbundenen freien Enden der anderen Segmentgruppe überdeckt,
- das andere Teil-Ringsegment mit einem freien Ende mit dem korrespondierenden freien Ende des anderen Teil-Ringsegment dieser Segmentgruppe verbunden ist und mit dem anderen freien Ende mit dem freien Ende eines Teil-Ringsegments der nachfolgenden Segmentgruppe, während das andere freie Ende des anderen Teil-Ringsegments mit einem freien Ende des korrespondierenden Teil-Ringsegments der vorhergehenden Segmentgruppe verbunden ist.

11. Spule nach Anspruch 10, **dadurch gekennzeichnet, dass** die Ringsegmente beider bzw. aller Segmentgruppen aus genau zwei separaten Teil-Ringsegmenten gebildet sind, wobei jedes Teil-Ringsegment zwei freie Enden aufweist, wobei vorzugsweise die Spule als Projektion eine Trapezform für jede Windung aufweist mit zwei gegenüberliegenden kurzen Trapezseiten und mit zwei gegenüberliegenden langen Trapezseiten, wobei vorzugsweise bei einer Segmentgruppe die freien Enden der Teil-Ringsegmente dieser Segmentgruppe an den langen Trapezseiten liegen und bei der anderen Segmentgruppe die freien Enden der Teil-Ringsegmente dieser Segmentgruppe an den kurzen Trapezseiten liegen, wobei insbesondere die freien Enden jeweils durch einen Mittelpunkt der Trapezseiten verlaufen.

12. Spule nach Anspruch 1, **dadurch gekennzeichnet, dass**:
- die Spule aus einzelnen Ringsegmenten ausgebildet ist, wobei ein Ringsegment im Wesentlichen eine Windung der Spule bildet,
- die Ringsegmente jeweils aus Flachmaterial mit gegenüberliegenden Flachseiten gebildet sind,
- die Ringsegmente aus mehreren unterschiedlichen, insbesondere zwei unterschiedlichen, ringförmigen Teil-Ringen aus Teil-Ringgruppen gebildet sind,
- jeder Teil-Ring eine Form einer Windung der Spule aufweist, wobei diese Form ringförmig geschlossen ist, insbesondere trapezförmig ist,
- jeder Teil-Ring eine Durchtrennung aufweist, die zwei Enden ergibt, die nicht überlappen, sondern stumpf aneinanderstoßen,
- das Ende eines Teil-Rings der einen Teil-Ringgruppe an anderer Stelle angeordnet ist als das Ende eines Teil-Rings der anderen Teil-Ringgruppe, insbesondere sich die Enden von unterschiedlichen Teil-Ringgruppen nicht überschneiden bzw. nicht überdecken,
- eine Windung der Spule in Schraubenlinienform im Wesentlichen aus mit ihren Flachseiten aufeinander gelegten Teil-Ringen jeweils der einen Teil-Ringgruppe und der anderen Teil-Ringgruppe gebildet ist derart, dass von einem unteren Teil-Ring ein Ende frei absteht zur Verbindung mit einem korrespondierenden Ende des Teil-Rings der vorhergehenden Windung, wobei ein Ende des überdeckenden Teil-Rings frei absteht zur Verbindung mit einem korrespondierenden Ende des anderen Teil-Rings der nachfolgenden Windung,
- die Spule in Schraubenlinienform gebildet ist durch Verbinden der Enden und der überlappenden Flachseiten der Teil-Ringe.

13. Spule nach einem der Ansprüche 9 bis 12, **dadurch gekennzeichnet, dass** die freien Enden der Teil-Ringsegmente bzw. der Teil-Ringe nicht gerade bzw. quer zu ihrem Längsverlauf abgeschnitten sind, sondern schräg dazu, insbesondere derart abgeschnitten sind, dass die Schnitte von einer Außenkante beginnend in einem Winkel zwischen 60° und 90° starten und dann schräg verlaufen, wobei vorzugsweise die Einschnitte an einem Ende eines Teil-Ringsegments relativ kurz sind, insbesondere in einem Winkel von insgesamt etwa 50° bis 70° zum Längsverlauf des Teil-Ringsegments in diesem Bereich verlaufen, wobei insbesondere eine Richtung des Einschnitts am gegenüberliegenden Ende des Teil-Ringsegments zwischen 10° und 30° zum Längsverlauf in diesem Bereich verläuft.

14. Spule nach einem der Ansprüche 9 bis 13, **dadurch gekennzeichnet, dass** die einzelnen Ringsegmente als Windungen, aus denen die Spule gebildet ist, auf den freien Flachseiten, insbesondere vollflächig, isoliert sind bzw. Isoliermaterial für eine elektrische Isolierung aufweisen, vorzugsweise ausgewählt aus der Gruppe Backlack, Isolierpapier, Isolierfolie, wobei vorzugsweise das Isoliermaterial Isolierpapier oder Isolierfolie ist und nachträglich zwischen die Windungen der Spule geschoben ist.

15. Spule nach Anspruch 14, **dadurch gekennzeichnet, dass** sie zwischen zwei Lagen aus Isoliermaterial mehr als zwei Lagen des leitfähigen Flachmaterials aufweisen, die aus den Segmentgruppen nach Anspruch 9 gebildet sind, wobei vorzugsweise die gleiche Anzahl beider Segmentgruppen vorgesehen ist, die insbesondere abwechselnd zwischen den Isolierlagen angeordnet sind, wobei vorzugsweise alle Segmentgruppen zwischen zwei Isolierlagen flach aufeinander liegen und elektrisch leitend miteinander verbunden bzw. kontaktiert sind.

16. Spule nach einem der vorhergehenden Ansprüche, **dadurch gekennzeichnet, dass** die Spule als Projektion einer Windung eine geometrische Grundform ist ausgewählt aus der Gruppe Kreis, Oval, Rechteck, Trapez.

17. Verfahren zum Herstellen einer Spule nach einem der vorhergehenden Ansprüche, **dadurch gekennzeichnet, dass** die Windungen der Spule hergestellt werden aus flachem Leitermaterial, das durchgängig doppellagig aufeinandergefaltet oder aufeinandergelegt wird in Schraubenlinienform, wobei aufeinanderfolgende Windungen gegeneinander elektrisch isoliert werden mittels Isoliermaterials.
